# EUROPEAN PATENT SPECIFICATION

(11) **EP 2 601 047 B1**
(45) Date of publication and mention of the grant of the patent: **26.11.2014**
(21) Application number: 11754905.5
(22) Date of filing: 02.08.2011
(51) Int. Cl.: C09D 139/02

(54) **METHODS OF COATING A LOW SURFACE ENERGY SUBSTRATE**
VERFAHREN ZUR BESCHICHTUNG EINES SUBSTRATES MIT GERINGER OBERFLÄCHENENERGIE
PROCÉDÉS DE REVÊTEMENT DE SUBSTRAT À FAIBLE ÉNERGIE DE SURFACE

(30) Priority: 04.10.2010 GB 201016664; 02.08.2010 GB 201012954
(43) Date of publication of application: 12.06.2013
(73) Proprietor: Syntor Fine Chemicals Limited, Manchester M1 5AN (GB)
(72) Inventor: ALLEN, Warrick James David, Gloucestershire GL20 8DN (GB); ROLFE, James Leonard, Gloucestershire GL20 8DN (GB); DUFFY, Andrea, Gloucestershire GL20 8DN (GB)
(74) Representative: Harrison IP Limited
(86) International application number: PCT/GB2011/051459
(87) International publication number: WO 2012/017233

(56) References cited:
- WO-A2-00/06610
- US-A- 4 021 229
- HALL A W ET AL: "THE PHOTOINITIATED CYCLOPOLYMERIZATION OF DIENES IN THE CREATION OF NOVEL POLYMERIC SYSTEMS AND THREE-DIMENSIONAL NETWORKS", JOURNAL OF MATERIALS CHEMISTRY, THE ROYAL SOCIETY OF CHEMISTRY, CAMBRIDGE, GB, vol. 14, 23 July 2004 (2004-07-23), pages 2593-2602, XP002400380, ISSN: 0959-9428, DOI: 10.1039/B402154C

## Description

This invention relates to methods of coating a low surface energy substrate. The invention also relates to novel polymers obtained therefrom.

Scientific Article "The Photoinitiated Cyclopolymerisation of Dienes in the Creation og Novel Polymeris Systems and Three-Dimensional Networks" (Hall A. W. Et al. Journal of Materials Chemistry. The Royal Society of Chemistry, Cambridge, GB, vol. 14, 23 July 2004, pages 2593-2602, XP002400380) discloses coatings and adhesives obtained from diallylamides. WO 00/06610 discloses a method for producing a polymeric material, said method comprising subjecting a starting material which includes two multiple bonds which are activated so that they will take part in a polymerisation reaction and wherein the multiple bonds are sufficiently close together to ensure that cyclopolymerisation will preferentially occur; to suitable conditions under which said polymerisation reaction will occur, provided that the starting material is other than triallyamine hydrochloride. The method can be used to produce polymers for various processes including adhesives, network polymers and liquid crystal polymers.

US4021229 discloses herbicidal compositions consist of an active herbicidal compound and an antidote therefor and a method of use of the herbicide compositions.

It would be desirable to provide a convenient method of coating a variety of low surface energy substrates including polyolefins and other polymeric substrates. It would be even more desirable to provide a coating which can adhere to a low surface energy substrate and which can itself act as a suitable substrate for either receiving a further coating or finish or as a layer to enable sufficient adhesion to. However, to date such coatings have been lacking.

The present invention, in at least some of its embodiments, overcomes the above mentioned problem, and satisfies the above mentioned needs.

According to a first aspect of the invention there is provided a method of coating a low surface energy substrate including the steps of:
a) providing a polymeric precursor which includes a group of sub- formula (I) 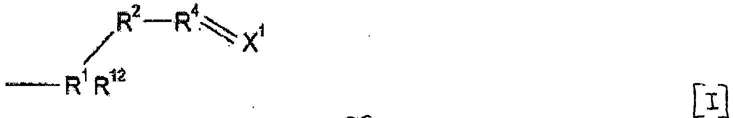
   where R¹ is C(O)N, S(O)₂N, C(O)ON or CH₂ON;
   R¹² is selected from hydrogen, halo, nitro:
   R² is (CR⁷R⁸)ₙ, or a group CR⁹R¹⁰, CR⁷R⁸CR⁹R¹⁰ or CR⁹R¹⁰CR⁷R⁸ where n is 0, 1 or 2, R⁷ and R⁸ are independently selected from hydrogen or alkyl, and either one of R9 or R¹⁰ is hydrogen and the other is an electron withdrawing group, or R⁹ and R¹⁰ together form an electron withdrawing group;
   R⁴ is CH or CR¹¹ where CR¹¹ is an electron withdrawing group; and
   X¹ is a group CX²X³, where X² and X³ are independently selected from hydrogen, fluorine or an optionally substituted hydrocarbyl group;
   and
b) either (i) coating the low surface energy substrate with the polymeric precursor and polymerising the polymeric precursor to form a polymeric coating, or (ii) polymerising the polymeric precursor and contacting the polymerised polymeric precursor with a low surface energy substrate to form a polymeric coating on the low surface energy substrate.

In this way, it is possible to coat low surface energy substrates, such as polypropylene. Without wishing to be bound by any particular theory, it is believed that at least part of the problem associated with bonding to low surface energy substrates lies in the initial requirement of deposited layer to have a surface tension lower than that of the surface energy of the substrate. Compounds of Formula (I) can be provided which are sufficiently hydrophobic in nature or otherwise suitable to adhere to the low surface energy substrate, but are nevertheless able to activate the double bond or bonds sufficiently for polymerisation to be able to occur.

For the avoidance of doubt, the term 'polymeric precursor' includes reference to monomers, and also to pre-polymers obtained by partial or pre-polymerisation of one or more monomers.

Preferably R¹⁶ is a C₃ to C₁₂ alkyl group, most preferably a C₅ to C₈ alkyl group.

Preferably, the polymeric precursor is polymerised by exposure to ultraviolet radiation. Alternative polymerisation methods include the application of heat (which may be in the form of IR radiation), where necessary in the presence of an initiator, by the application of other sorts of initiator such as chemical initiators, or by initiation using an electron beam. The expression "chemical initiator" as used herein refers to compounds which can initiate polymerisation such as free radical initiators and ion initiators such as cationic or anionic initiators as are understood in the art. Radiation or electron beam induced polymerisation is suitably effected in the substantial absence of a solvent. As used herein, the expression "in the substantial absence of solvent" means that there is either no solvent present or there is insufficient solvent present to completely dissolve the reagents, although a small amount of a diluent may be present to allow the reagents to flow.

In the preferred embodiments in which the monomer is polymerised by exposure to ultraviolet radiation, polymerisation may take place either spontaneously or in the presence of a suitable initiator. Examples of suitable initiators include 2, 2' - azobisisobutyronitrile (AIBN), aromatic ketones such as benzophenones in particular acetophenone; chlorinated acetophenones such as di- or tri-chloracetophenone; dialkoxyacetophenones such as dimethoxyacetophenones (sold under the trade name "Irgacure 651") dialkylhydroxyacetophenones such as dimethylhydroxyacetophenone (sold under the trade name "Darocure 1173"); substituted dialkylhydroxyacetophenone alkyl ethers such compounds of formula 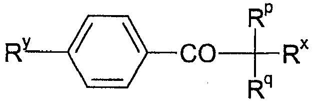 where R^{y} is alkyl and in particular 2, 2-dimethylethyl, R^{x} is hydroxyl or halogen such as chloro, and R^{p} and R^{q} are independently selected from alkyl or halogen such as chloro (examples of which are sold under the trade names "Darocure 1116" and "Trigonal P1"); 1-benzoylcyclohexanol-2 (sold under the trade name "Irgacure 184"); benzoin or derivatives such as benzoin acetate, benzoin alkyl ethers in particular benzoin butyl ether, dialkoxybenzoins such as dimethoxybenzoin or deoxybenzoin; dibenzyl ketone; acyloxime esters such as methyl or ethyl esters of acyloxime (sold under the trade name "Quantaqure PDO"); acylphosphine oxides, acylphosphonates such as dialkylacylphosphonate, ketosulphides for example of formula 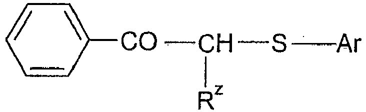 where R^{z} is alkyl and Ar is an aryl group; dibenzoyl disulphides such as 4, 4'-dialkylbenzoyldisulphide; diphenyldithiocarbonate; benzophenone; 4, 4'-bis (N, N-dialkyamino) benzophenone; fluorenone; thioxanthone; benzil; or a compound of formula 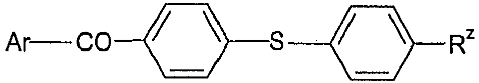 where Ar is an aryl group such as phenyl and R^{z} is alkyl such as methyl (sold under the trade name "Speedcure BMDS").

As used herein, the term "alkyl" refers to straight or branched chain alkyl groups, suitably containing up to 20 and preferably up to 6 carbon atoms. The terms "alkenyl" and "alkynyl" refer to unsaturated straight or branched chains which include for example from 2-20 carbon atoms, for example from 2 to 6 carbon atoms. Chains may include one or more double to triple bonds respectively. In addition, the term "aryl" refers to aromatic groups such as phenyl or naphthyl.

The term "hydrocarbyl" refers to any structure comprising carbon and hydrogen atoms. For example, these may be alkyl, alkenyl, alkynyl, aryl such as phenyl or napthyl, arylalkyl, cycloalkyl, cycloalkenyl or cycloalkynyl. Suitably they will contain up to 20 and preferably up to 10 carbon atoms. The term "heterocylyl" includes aromatic or non-aromatic rings, for example containing from 4 to 20, suitably from 5 to 10 ring atoms, at least one of which is a heteroatom such as oxygen, sulphur or nitrogen. Examples of such groups include furyl, thienyl, pyrrolyl, pyrrolidinyl, imidazolyl, triazolyl, thiazolyl, tetrazolyl, oxazolyl, isoxazolyl, pyrazolyl, pyridyl, pyrimidinyl, pyrazinyl, pyridazinyl, triazinyl, quinolinyl, isoquinolinyl, quinoxalinyl, benzthiazolyl, benzoxazolyl, benzothienyl or benzofuryl.

The term "functional group" refers to reactive groups such as halo, cyano, nitro, oxo, C(O)ₙR^{a}, OR^{a}, S(O)ₜR^{a}, NR^{b}R^{c}, OC(O)NR^{b}R^{c}, C(O)NR^{b}R^{c}, OC(O) NR^{b}R^{c}, -NR⁷C(O)ₙR⁶, -NR^{a}CONR^{b}R^{c}, - C=NOR^{a}, -N=CR^{b}R^{c}, S(O)ₜNR^{b}R^{c}, C(S)ₙR^{a}, C(S)OR^{a}, C(S)NR^{b}R^{c} or - NR^{b}S(O)ₜR^{a} where R^{a}, R^{b} and R^{c} are independently selected from hydrogen or optionally substituted hydrocarbyl, or R^{b} and R^{c} together form an optionally substituted ring which optionally contains further heteroatoms such as S(O)ₛ, oxygen and nitrogen, n is an integer of 1 or 2, t is 0 or an integer of 1-3. In particular, the functional groups are groups such as halo, cyano, nitro, oxo, C(O)ₙR^{a}, OR^{a}, S(O)ₜR^{a}, NR^{b}R^{c}, OC(O)NR^{b}R^{c}, C(O)NR^{b}R^{c}, OC(O)NR^{b}R^{c}, -NR⁷C(O)ₙR⁶, -NR^{a}CONR^{b}R^{c}, - NR^{a}CSNR^{b}R^{c}, C=NOR^{a}, -N=CR^{b}R^{c}, S(O)ₜNR^{b}R^{c}, or -NR^{b}S(O)ₜR^{a} where R^{a}, R^{b} and R^{c}, n and t are as defined above.

The term "heteroatom" as used herein refers to non-carbon atoms such as oxygen, nitrogen or sulphur atoms. Where the nitrogen atoms are present, they will generally be present as part of an amino residue so that they will be substituted for example by hydrogen or alkyl.

The term "amide" is generally understood to refer to a group of formula C(O)NR^{a}R^{b} where R^{a} and R^{b} are hydrogen or an optionally substituted hydrocarbyl group. Similarly, the term "sulphonamide" will refer to a group of formula S(O)₂NR^{a}R^{b}. Suitable groups R^{a} include hydrogen or methyl, in particular hydrogen.

The nature of any electron withdrawing group or groups additional to the amine moiety used in any particular case will depend upon its position in relation to the double bond it is required to activate, as well as the nature of any other functional groups within the compound. The term "electron withdrawing group" includes within its scope atomic substituents such as halo, e.g. fluro, chloro and bromo, and also molecular substituents such as nitrite, trifluoromethyl, acyl such as acetyl, nitro, or carbonyl.

In the group of sub-formula (I).
X¹ is a grout CX²X³, where X² and X³ are independently selected from hydrogen, fluorine or an optionally substituted hydrocarbyl group.

Preferably, R⁷ and R⁸ are independently selected from fluoro, chloro **or alkyl or H. In the case of alkyl, methyl is most preferred.

Preferably, X² and X³ are hydrogen.

It is possible that at least one, and possibly both of X² and X³ is a substituent other than hydrogen or fluorine. Preferably at least one, and possibly both, of X² and X³ is an optionally substituted hydrocarbyl group. In such embodiments, it is preferred that at least one, and most preferably both, of X² and X³ is an optionally substituted alkyl group.

Particularly preferred examples are C₁ to C₄ alkyl groups, especially methyl or ethyl. Embodiments in which X² and/or X³ are alkyl groups are able to polymerise when exposed to radiation without the presence of an initiator. Alternatively, at least one, and preferably both, of X² and X³ are aryl and/or heterocyclic, such as pyridyl, pyrimidinyl, or a pyridine or pyrimidine containing group.

A preferred group of polymeric precursors for use in the method of the invention are compounds of formula (II) 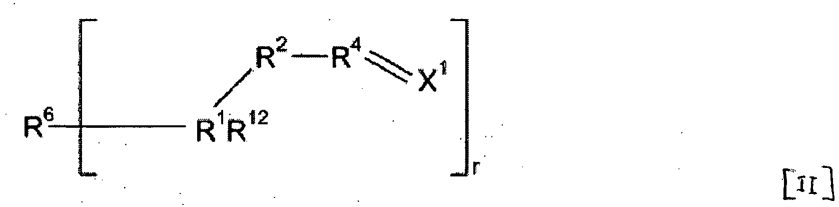 where r is an integer of 1 or more, R⁶ is one or more of a bridging group, an optionally substituted hydrocarbyl group, a perhaloalkyl group, a siloxane group, an amide, or a partially polymerised chain containing repeat units.

In preferred embodiments of formula (II), R¹ is S(0)₂N or C(0)N. Thus, the polymeric precursor may be a compound of structure (III) 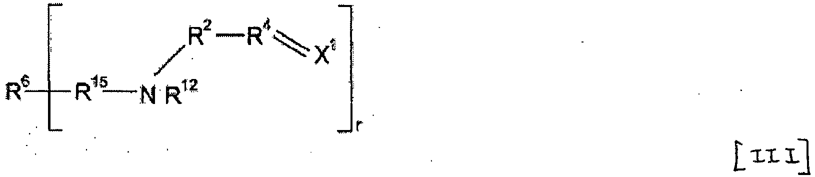 where R¹⁵ is C(O) or S(0)₂.

Where in the compounds of formulae (II) to (III), r is 1, compounds can be readily polymerised to form a variety of polymer types depending upon the nature of the group R⁶.

Where in the compounds of formulae (II) to (III), r is greater than one, polymerisation can result in polymer networks. On polymerisation of these compounds, networks are formed whose properties maybe selected depending upon the precise nature of the R⁶ group, the amount of chain terminator present and the polymerisation conditions employed. Some examples of bridging groups can be found in WO 00/06610.

Preferably, R⁶ comprises a straight or branched chain hydrocarbyl group, optionally substituted or interposed with functional groups. Advantageously, the straight or branched chain hydrocarbyl is interposed or substituted with one or more of an amine moiety, C(O) or COOH.

In some embodiments, the polymeric precursor is a monomer in which R⁶ is a straight or branched chain hydrocarbyl interposed with an amine moiety, or a pre-polymer obtained by pre-polymerisation of said monomer. Preferably, the monomer is a straight or branched chain alkyl group having 1 to 30 carbon atoms, optionally interposed with a cyclic group. In other preferred embodiments, the polymeric precursor is a monomer in which R⁶ is a straight or branched chain hydrocarbyl substituted with a COOH end group, or a pre-polymer obtained by pre-polymerisation of said monomer. The monomer may be a straight or branched chain alkyl group having 1 to 30 carbon atoms, optionally interposed with a cyclic group.

In alternative embodiments, the polymeric precursor is a monomer in which R⁶ is a straight or branched chain alkyl group having 1 to 30 carbon atoms, or a pre-polymer obtained by pre-polymerisation of said monomer.

In other embodiments still, the polymeric precursor is a monomer in which, R⁶ is a partially or per-halogenated straight or branched chain alkyl group having 1 to 30 carbon atoms, or a pre-polymer obtained by pre-polymerisation of said monomer. Preferably, the alkyl group is per-halogenated. It is preferred that the alkyl group is fluorinated, most preferably perfluorinated.

In other embodiments still, the polymeric precursor is a monomer in which R¹⁵ is CO and R⁶ terminates in one or more amine moieties forming a urea structure, or a pre-polymer obtained by pre-polymerisation of said monomer.

In yet further embodiments, the polymeric precursor is a monomer of structure (VIII) 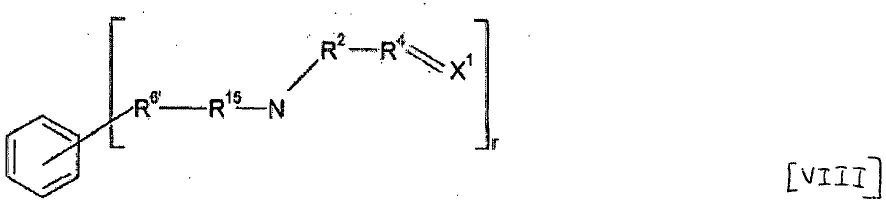 where R^{6'} is a straight or branched chained hydrocarbyl group, optionally substituted or interposed with functional groups, and r is an integer of two or more, or a pre-polymer obtained by a pre-polymerisation of said monomer. Preferably, r is two or three.

In other embodiments, R¹⁵ is hydrogen or hydrocarbyl. In these embodiments, a preferred class of the compound of formula (I) is represented as structure (X) 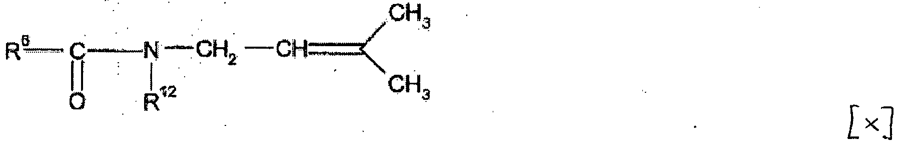 where R⁶ is selected from hydrogen/ halo, nitro, or hydrocarbyl, optionally substituted or interposed with functional groups, only. A particularly preferred compound of formula (X) is a compound of formula (XI)

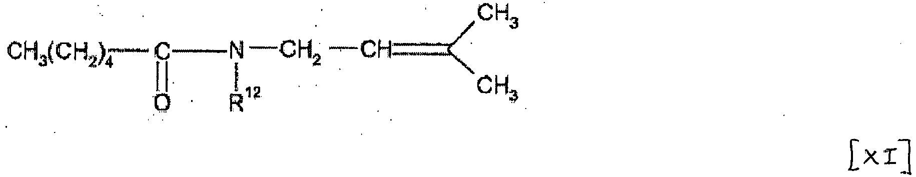

International Publications WO 00/06610, WO 00/06533, WO 00/06658, WO 01/36510, WO 01/40874 and WO 01/74919, disclose a class of polymers obtained from the polymerisation of a number of compounds which possess one or more dienyl groups.

The polymerisation of the polymeric precursor may produce a homopolymer. Alternatively, the step of polymerising the polymeric precursor may produce a copolymer, the polymeric precursor being mixed with one or more other polymeric precursor. The other polymeric precursor may be according to any of the formulae described herein. Alternatively, the comonomer may be of a different class of compounds. The polymeric precursor may be copolymerised with a cross-linker. In these embodiments, the polymeric precursor may be reacted with a compound of formula (XII) 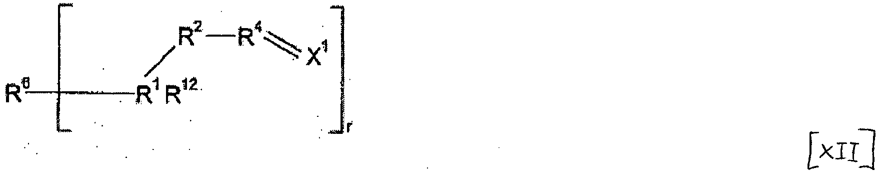 where R¹, R², R⁴, R¹² and X¹ are as defined in relation to formula (I), r is an integer of 2 or more, and R⁶ is a bridging group of valency r or a bond. Preferably, r is 2.

The compound of formula (XII) may be a compound of formula (XIII)

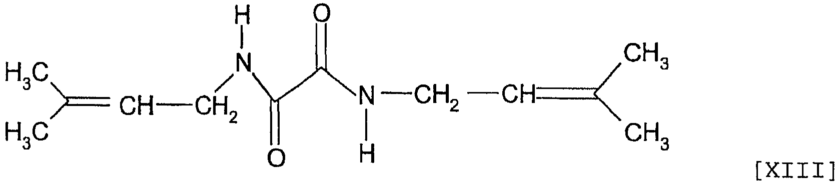

The monomer or co-monomers may be pre-polymerised to produce a pre-polymer. Typically, a thermal initiator is used and pre-polymerisation is performed at an elevated temperature above ambient temperature.

In one class of preferred embodiments, the low surface energy substrate is a low surface energy plastics material. Preferably, the low surface energy plastics material is a polyolefin, a polyester, a polystyrene, a styrene copolymer, polyvinyl chloride, or a mixture of a polyolefin with an elastomer. Non-limiting examples of low surface energy plastics materials are polypropylene, polyethylene, polyethylene terephthalate (PET), polybutylene terephthalate (PBT), or acryl nitrile butadiene styrene.

The low surface energy plastics material may be an elastomer. For the avoidance of doubt, the term "elastomer" includes reference to natural and synthetic rubbers. Coatings may be made on elastomers which have traditionally been difficult to adhere to, such as silicone rubbers, fluoro-silicone rubbers, fluorocarbon rubbers, ethylene propylene rubbers including EPDM rubbers, styrene-butadiene rubbers, nitrile butadiene rubbers, or thermoplastic rubbers such as styrene-butadiene block copolymers.

In another preferred class of embodiments, the low surface energy substrate is a low surface energy metal such as aluminium, tin or chromium.

Typically, the low surface energy substrate has a surface energy of less than or equal to 42 mJ/m².

Highly advantageously, the polymeric coatings of the invention can be used as adhesion promoters in a wide variety of useful applications. In one aspect, a composite structure is formed in a method of the invention in which step b) includes bringing a further substrate into contact with the polymeric precursor or the polymerised polymeric precursor, with step b) being performed so that the polymeric coating joins the low surface energy substrate to the further substrate. The further substrate may be a textile fabric. Alternatively, the further substrate may be another low surface energy substrate of any type as described herein.

The step b) may be performed by (ii) polymerising the polymeric precursor and contacting the polymerised polymeric precursor with a low surface energy substrate to form a polymeric coating on the low surface energy substrate; wherein the polymeric precursor is polymerised on the further substrate, and subsequently the polymerised polymer precursor, with the further substrate attached thereto, contacts the low surface energy substrate so that a composite structure is formed which includes the further substrate, the low surface energy substrate and a layer of the polymerised polymeric precursor intermediate the further substrate and the low surface energy substrate which bonds to both the substrates. There are a number of ways in which this can be achieved. In one embodiment, the polymerised polymeric precursor is contacted with the low surface energy substrate by bringing a solid low surface energy substrate into contact with the polymerised polymeric precursor, optionally with the application of heat and/or pressure. Alternatively, the polymerised polymeric precursor may be contacted with the low surface energy substrate by bringing a molten low surface energy material into contact with the polymerised polymeric precursor.

In embodiments in which a composite structure is formed by bringing a further substrate into contact with the polymeric precursor or the polymerised polymeric precursor, the low surface energy substrate may be an elastomer. The further substrate may be a metal or an elastomer.

Advantageously, the method may further include the step of (c) applying a further coating to the polymeric coating. It is advantageous that polymers obtained in accordance with the invention are capable of both coating a low surface energy substrate and supporting a further coating. Without wishing to be limited by any particular theory, it is believed that it is advantageous that at least some of the polymeric precursors and polymers used in the present invention have sufficient hydrophobicity to enable bonding to the low surface energy substrate to take place, and, if required, sufficient hydrophilicity to enable the polymeric coating to be coated successfully by substances of higher surface energies. It is also advantageous that these features can be provided without substantially compromising the ability to polymerise.

The coating applied to the polymeric coating may be a paint, ink, metal or protective coating such as a polyurethane layer. Although commonly the further layer will completely overlay the polymeric coating, it is also possible that the further coating occupies only a subset of this area, for example, if the further coating is utilised in the form of lettering, marking, or a graphical design.

Advantageously, the coating applied to the polymeric coating is an adhesive. In this way, a structure can be adhered to the low surface energy substrate by the adhesive and the polymeric coating. The structure adhered to the low surface energy substrate can be of any suitable form or material. The adhesive can be selected by the skilled reader in accordance with the nature of the structure to be adhered. In preferred embodiments, the adhesive is a water- based adhesive or a hot-melt adhesive. The hot-melt adhesive may be formed from a polymeric material. Polyurethane, polyethylene, polypropylene, or polyethylene terephthalate hot-melt adhesives may be utilised.

According to a fourth aspect of the invention there is provided a coated low surface energy substrate in which the coating is a polymeric coating formed from polymerising a polymeric precursor which includes a group of sub-formula (I) as defined in the first aspect of the invention.

The coated low surface energy substrate may include a further coating applied to the polymeric coating. The further coating may be a paint, ink, protective coating, or an adhesive. The embodiments in which this outer coating is an adhesive, the coated low surface energy substrate may further comprise a structure adhered to the low surface energy substrate by the adhesive and the polymeric coating.

According to a fifth aspect of the invention there is provided a composite structure including a low surface energy substrate, a further substrate and a layer intermediate the low surface energy substrate and the further substrate which bonds to both substrates and is formed by polymerising a polymeric precursor which includes a group of sub-formula (I) as defined in the first aspect of the invention. The composite structure can be prepared using either step (i) or step (ii) as previously defined.

All aspects of the invention described above may further include the proviso that the low surface energy substrate coated by the polymeric coating/ having said layer intermediate the low surface energy substrate and the further substrate does not comprise part of a lip of a sealing system.

Whilst the invention has been described above, it extends to any inventive combination of sub-combination of the features set out above or in the following description, drawings or claims.

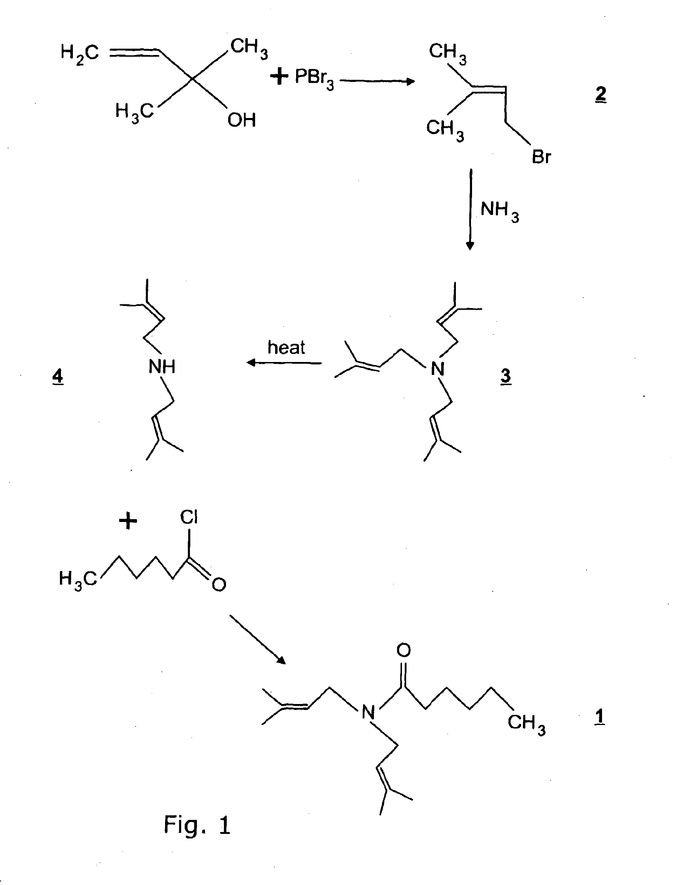

Embodiments of monomers, polymers, and methods of coating a polyolefin substrate will now be described with reference to the accompanying
Comparative Figure 1 shows a first reaction scheme; and

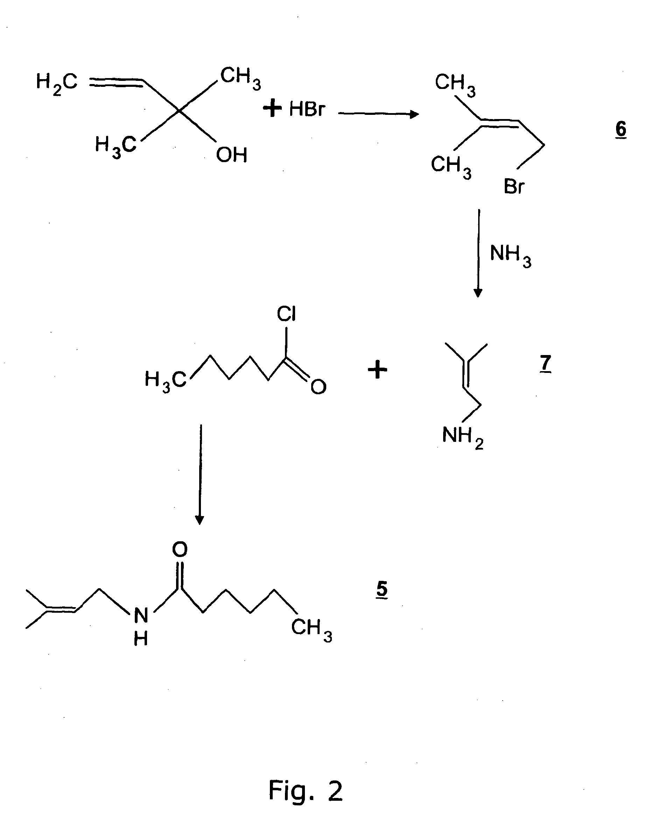

Figure 2 shows a second reaction scheme.

Unless otherwise stated, all percentages described below are wt%.

### Comparative Example 1

The comparative target molecule 1 (hexanoic acid (bis(3-methylbut-2-enyl) amide) is shown below 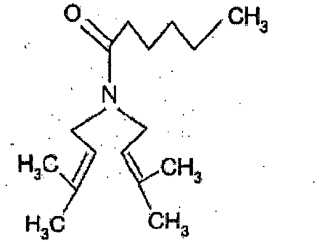 and the synthetic scheme is shown in comparative Figure 1.

The synthesis of monomer 1 is described below. Reactions 1.1, 1.2, 1.3 and 1.4 were carried out under an atmosphere of argon using pre-dried solvents; t-butyl methyl ether was dried over CaS04 overnight, passed through alumina and fractionally distilled, pyridine was dried over Linde type 4A molecular sieves followed by distillation, tetrahydrofuran (THF) was refluxed over sodium- benzophenone mixture before collection.

Column chromatography was carried out using flash grade silica.

### 1.1 Synthesis of 1-bromo-3-methylbut-2-ene(2)

t-Butyl methyl ether (1000 ml) and 3-methylbuten-3-ol (230g, 280ml, 2.67 moles) were charged into a multi neck flung flask (3 L) fitted with a mechanical stirrer, condenser, thermometer and a dropping funnel. Pyridine (21 g, 22ml, 0.267 moles) was added and the contents of the flask were stirred at room temperature for 30 minutes after which time PBr₃ (361 g, 125ml, 1.33 moles) was added with stirring via dropping funnel at such a rate as to maintain the internal temperature below 40°C, preferably around 30°C (note that the reaction is exothermic). Once addition was complete the reaction mixture was allowed to stir for 4 hours. After this time TLC and HPLC indicated that the reaction had gone to completion. Once at room temperature, the mixture was quenched by the addition of saturated NaCl solution with stirring (1 L).

The organic layer was separated and aqueous layer extracted with t-buytl methyl ether (3 x 300ml). Combined organic layers were washed twice with saturated NaHCO₃ (2x 500ml) followed by water (2x 200ml) then with brine (500ml). The ether layer was dried over anhydrous MgSO₄ and solvent removed under atmospheric pressure. The distillation apparatus was connected to a vacuum pump (water pump) and the bromide was distilled at 40 - 60 degrees at pressure of about 25 mmHg to afford a pale yellow oil (318g, 80% yield).

### 1.2 Preparation of Tertiary amine (3)

A multi neck flung flask (2L), fitted with a mechanical stirrer, condenser, thermometer and dropping funnel, and placed in a cooling bath (ice-water) was charged with acetone (500ml), concentrated aqueous ammonia solution (30 ml) and anhydrous potassium carbonate (159g, 1.15 mole). The mixture was stirred at room temperature for 30 minutes. Allyl bromide (52.5g, 0.35 mole) was added via a dropping funnel at such a rate that the internal reaction is maintained below 25 degrees for 20 minutes. The reaction was stirred at room temperature for 3 hours after which time TLC (silica, 5% methanol in DCM) indicated reaction completion. The solid suspension was filtered off and washed with acetone (2x50 ml). The solvent was evaporated under reduced pressure and the tertiary amine 3 was obtained as a pale yellow which solidified on standing (28g, 107% crude).

### 1.3 Preparation of Secondary Amine (4)

Crude tertiary amine (9g, 41 mmol) was placed in a 25 ml round bottomed (RB) flask fitted with a condenser. The contents of the flask were heated in a DrySyn (RTM) (an aluminium block) placed on a stirrer hot plate to 200°C (external temperature) over 30 minutes. Solid material started to melt at around 140 -150°C. The material was heated at 200°C for 2.5 hours. The progress of the reaction was monitored by TLC (silica, 10% methanol in DCM with 5 drops of methanolic ammonia solution). After this time the reaction mixture was allowed to cool to room temperature.

### 1.4 Preparation of hexanoic acid (bis (3-methylbut-2-enyl) amide

The cool reaction mixture from the previous step was transferred to a 100ml RB flask containing potassium carbonate (6g, 43 mmole) with 30ml acetone. This was stirred at room temperature and hexanoyl chloride (3.8g, 3ml, 28 mmole) was added dropwise via a dropping funnel over 10 minutes with stirring. The reaction mixture was allowed to stir at room temperature overnight, and the next day TLC (silica plates, 2.5% methanol in DCM) indicated the formation of the target monomer 1. The solvent was removed under reduced pressure and solids were washed with 30 ml of petroleum ether (40 - 60) and filtered. Decolorising charcoal (1 g) was added to the filtrate and heated to boil and then filtered hot. Solvent was removed under reduced pressure to afford a pale brown oil (5.0g, 49% yield). HPLC indicated a purity of 94%.

### Comparative Example 2

### Polymerisation of hexanoic acid (bis (3-methylbut-2-enyl) amide (1)

Hexanoic acid (bis (3-methylbut-2-enyl) amide 1 was applied to a polypropylene substrate and polymerised easily under UV radiation (mercury discharge UV emitter) using ca 1.5% by weight of Irgacure 184 photoinitiator. Exposure times as little as 1 second were sufficient to effect polymerisation.

### Comparative Example 3

### Polymerisation of hexanoic acid (bis (3-methylbut-2-enyl) amide (1) without photoinitiator

Hexanoic acid (bis (3-methylbut-2-enyl) amide 1 polymerised on polypropylene under UV radiation (mercury discharge UV emitter) without employing a photoinitiator. Cure was effected in as little as 1 second. Polymerisation was equally facile in a further experiment using LED UV light sources operating at 390 nm to cure the monomer in the absence of photoinitiator.

### Example 4

The target molecule 5 (hexanoic acid (bis (3-methylbut-2-enyl) amide) is shown below 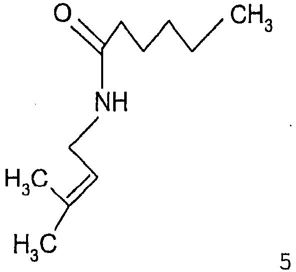 and the synthetic scheme is shown in Figure 2.

### 4.1 Synthesis of 1-bromo-3-methylbut-2-ene (6)

3-methyl-buten-3-ol (97%, 500ml) was added to hydrobromic acid (48%, 1 L) at room temperature with constant stirring for 2 hours. The mixture was then left to stand for another 2 hours, after which the top transparent yellow layer was decanted away from the aqueous/HBr bottom layer. The top layer was dried thoroughly over CaSO₄ and then distilled at 63°C to produce a colourless liquid of density 1.26 g/ml.

### 4.2 Preparation of Primary Amine (7)

The bromo methyl butane 6 was dissolved in acetone (50ml) and this solution added dropwise, with stirring, to a pre-cooled solution to -5°C of concentrated aqueous ammonium hydroxide (25ml) in the presence of potassium carbonate (22g). The mixture was stirred at this temperature for 30 minutes after which time it was allowed to come to room temperature. The solvent and primary amine 7 were removed in-vacuo.

### 4.3 Preparation of hexanoic acid (3-methylbut-2-enyl) amide (5)

Hexanoyl chloride (3.8g) was added dropwise to the secondary amine and acetone, with stirring, over 30 minutes at room temperature. The reaction was allowed to stir for four hours after which time the solvent was removed in-vacuo to leave a yellow oil, which was purified by silica gel flash column chromatography using dichloromethane as eluent. The target monomer 5 is a pale yellow oil.

### Example 5

### Polymerisation of hexanoic acid (3-methylbut-2-enyl) amide (5)

The monomer 5 polymerised under UV radiation using the conditions described in Example 2.

### Example 6

### Polymerisation of hexanoic acid (3-methylbut-2-enyl) amide (5) with a cross-linker

Monomer 5 was produced in accordance with Example 4, and was copolymerised with a cross-linker compound

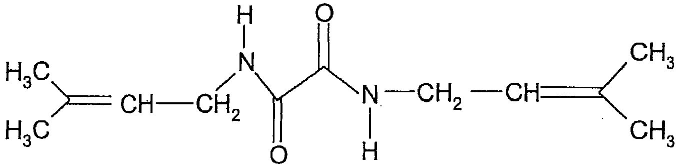

The cross-linker compound was prepared using the methodology described in Example 4, with the exception that the hexanoyl chloride used in step 4.3 was replaced with oxaloyl chloride (CIOOCCOOCI) in a molar ratio of 2:1 (primary amine 7: oxaloyl chloride). The cross-linker (5%) was dissolved in monomer 5 (95%) at room temperature, and the resultant solution copolymerised easily using polymerisation conditions as described in Example 2.

### Comparative Example 7

The comparative target molecule 8 (hexanoic acid diallyamide) is shown below

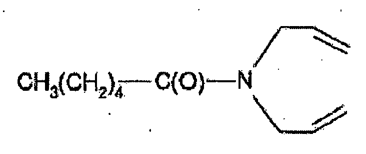

Fresh, dry hexanoyl chloride (200 mmoles) was placed into a 3-necked round bottomed (RB) flask with 200 ml of dry dichloromethane. Freshly distilled diallylamine (220mmoles) was added to triethylamine (220mmoles), further diluted (1 :1 v/v) in dry dichloromethane then added into a dropping funnel and placed onto the reaction flask. Nitrogen gas was pumped through the vessel through the other two necks. To neutralise HCl produced, the waste gas was bubbled through a CaC03 solution. The reaction vessel was then placed into a salt water/ice bath and once the contents were cooled the diallylamine/triethylamine/DCM was added dropwise to the acid chloride solution with continual magnetic stirring of the mixture. The temperature was monitored and maintained between 5-10[deg.]C. The dropping of the diallylamine and triethylamine was stopped after three hours and the reaction was left to stir for another hour.

Thin layer chromatography using ethyl acetate and an alumina was used to monitor the reaction comparing starting material to the product. Iodine was used to develop the plate and the reaction product could be seen as a spot that had been eluted much further than the starting material.

To remove the amine chloride and excess diallylamine the reaction liquor was washed in 3M HCl. The monomer stayed in the DCM fraction and was removed using a separating funnel. For 20g of monomer in 200 ml DCM, 2 washes of 100ml HCl were used. The solvent was then removed in a rotary evaporator.

The product was added to dichloromethane (1 :1 v/v) and passed through a silica gel (Merck, grade 60 for chromatography) column with dichloromethane as the eluent. Some yellow coloration was left in the column which yielded, after removal of the eluent, a very pale yellow oil. The product hexanoic acid (8) was produced in -70% yield.

### Comparative Example 8

### Polymerisation of hexanoic acid diallylamide (8)

Hexanoic acid diallylamide (8) was applied to a polypropylene substrate and polymerised easily under UV radiation using ca 1.5% by weight of Irgacure 250 photoinitiator.

### Comparative Example 9

### Polymerisation of hexanoic acid diallylamide (8) without photoinitiator

Hexanoic acid diallylamide (8) was applied to a polypropylene substrate and polymerised without photoinitiator under relatively intense UV radiation from a high intensity Fusion UV lamp.

### Comparative Example 10

### Polymerisation of hexanoic acid diallylamide (8) with a cross linker

Monomer 8 was produced in accordance with Example 7, and was copolymerised with a cross-linker compound N, N, N', N' - Tetraallylethanediamide

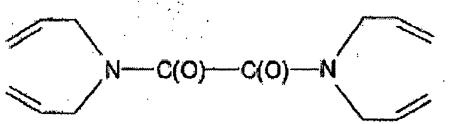

The cross-linker compound was prepared using the methodology described in Example 7, with the exception that the hexanoyl chloride was replaced with oxaloyl chloride (CIOOCCOOCI) in a molar ratio of 2:1 (diallylamine: oxaloyl chloride). The cross-linker (5%) was dissolved in monomer 8 (95%) at room temperature, and the resultant solution copolymerised easily using the polymerisation conditions described in Example 8.

### Comparative Example 11

The comparative target molecule 9 (octyl (diallysulfonamide)) is shown below

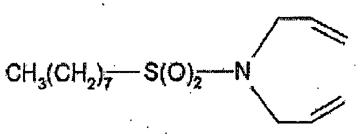

Fresh dry octylsulfonyl chloride (200mmoles) was placed into a 3-necked RB flask with 200ml of dry dichloromethane. Freshly distilled diallylamine (220mmoles) was added to triethylamine (220mmoles), further diluted (1 :1 v/v) in dry dichloromethane then added into a dropping funnel and placed onto the reaction flask. Nitrogen gas was pumped through the vessel through the other two necks. To neutralise HCl produced, the waste gas was bubbled through a CaCO₃ solution. The reaction vessel was then placed into a salt water/ice bath and once the contents were cooled the diallylamine/triethylamine/DCM was added dropwise to the acid chloride solution with continual magnetic stirring of the mixture. Temperature was monitored and maintained between 5-10°C. Dropping of the diallylamine and triethylamine was stopped after three hours and the reaction was left to stir for another hour.

Thin layer chromatography using ethyl acetate and an alumina was used to monitor the reaction comparing starting material to the product. Iodine was used to develop the plate and the reaction product could be seen as a spot that had been eluted much further than the starting material.

To remove the amine chloride and excess diallylamine the reaction liquor was washed in 3M HCl. The monomer stayed in the DCM fraction and was removed using a separating funnel. For 20g of monomer in 200ml DCM, 2 washes of 100ml HCl were used. The solvent was then removed in a rotary evaporator.

The product was added to dichloromethane (1 :1 v/v) and passed through a silica gel (Merck, grade 60 for chromatography) column with dichloromethane as the eluent. The element was subsequently removed, to leave the product (9).

### Comparative Example 12

### Polymerisation of octyl (diallylsulfonamide) (9)

Octyl (diallysulfonamide) (9) polymerised on a polypropylene substrate under the conditions described in Example 2.

### Comparative Example 13

### Adhesion promotion of SBR rubber to water based adhesives using a copolymer of N, N-Diallyl-3-(propylamino)propanamide and N, N, N', N'-Tetraallylethanediamide

A mixture of N, N-Diallyl-3-(propylamino)propanamide (1060.5g) and N, N, N', N'-Tetraallylethanediamide (79.5g) was heated to 80°C and maintained at this temperature with constant stirring. To this mixture a concentrate of Vazo 67 (DuPont) thermal initiator (75.0g) dissolved in N, N-Diallyl-3 propylamino)propanamide (264.75g) and N, N, N', N'-Tetraallylethanediamide (20.25g) was added dropwise over 6 hours with stirring and the reaction temperature maintained at 80°C. After addition of the concentrate the reaction was left for a further 12 hours at this temperature with constant stirring and then left to cool to room temperature to yield a viscous brown oil. ITX photoinitiator (45.0g) and ethyl 4-dimethylaminobenzoate synergist (30.0g) were then added and fully dissolved into the reaction product.

A layer of this formulation was coated onto a sheet of SBR rubber flooring at a coating weight of approximately 2gsm and cured using a focused 200W/cm UV source with an iron doped mercury bulb at a belt speed of 4 metres/minute.

### Synthesis of, N-Diallyl-3-(propylamino)propanamide

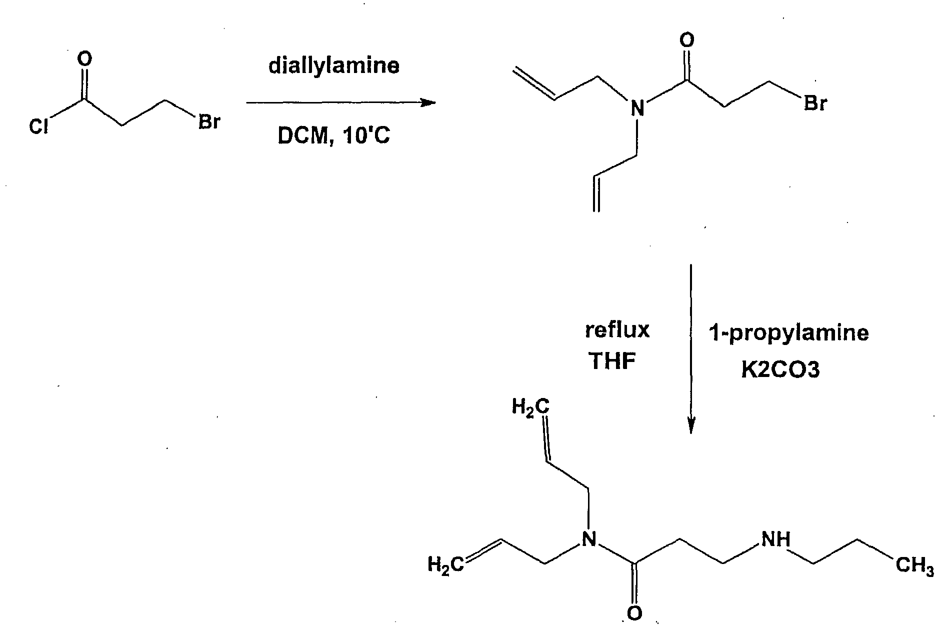

3-bromopropionylchloride in dichloromethane (1:1 v/v) was added drop wise to a slight molar excess of diallylamine in dichloromethane (DCM) at ~10°C over 2 hours with constant stirring. This was then washed in dilute HCl and DCM and the organic fraction retained. The solution of product in DCM was then purified by column chromatography using silica (60A) and the dichloromethane removed to yield the 3-bromo-N,N-diallylpropylamide intermediate; a yellow liquid (density ~ 1.27g/cm³). Yield 70%+.

Intermediate from 1 (30g, 129mmoles) was added to THF (1:1 v/v). This was then added dropwise over 2 hours into a stirred, refluxing mixture of 1-propylamine (43.1g, 0.730 mmoles), potassium carbonate (90g, 0.652mmoles) and THF (133.6g, 1.850mmoles). The reflux was then left to cool over 1 hour with constant stirring.

The cooled reaction mixture was washed in water (400ml), dissolving the potassium carbonate and leaving a clear, yellow organic top layer, which was decanted off. This layer was then washed again in water, separated and dried to yield a yellow liquid. Yield ~ 65%.

### Example 14

### Adhesion promotion of a poly(propylene)/EPDM substrate to cyanoacrylate adhesive using an adhesion promotion layer consisting of a polymer made with 2,2,3,3,4,4,4-heptafluoro-N,N-di(prop-2-en-1-yl)butanamide

The photoinitiator Irgacure 184 (Ciba SC) (0.075g) was dissolved into 2,2,3,3,4,4,4-heptafluoro-*N*,*N*-di(prop-2-en-1-yl)butanamide (2.50g) and deposited as a thin film onto a poly(propylene)/EPDM panel using a foam roller. A circular piece of mild steel was abraded with glass paper and then bonded to the coated poly(propylene/EPDM) surface with a cyanoacrylate adhesive.

Synthesis of 2,2,3,3,4,4,4-heptafluoro-N,N-di(prop-2-en-1-yl)butanamide A mixture of freshly distilled N,N-Diallylamine (9.50g, 96.8 mmoles) and dry dichloromethane (50.0g) was purged with bubbling nitrogen for one hour and then transferred to a dropping funnel and sealed. This mixture was then added dropwise over 2 hours to a reaction vessel containing a cooled mixture (5°C) of heptafluorobutanol chloride (10.0g, 43 mmoles) in dry dichloromethane (100.0g) that had also been purged previously with nitrogen for one hour with constant stirring. The temperature was maintained at < 10°C throughout the addition of the diallylamine solution and for one hour afterwards. After this the solution was allowed to warm to room temperature and the reaction mixture washed in water (300ml). The organic phase was washed twice again in water (300ml), separated and dried over anhydrous magnesium sulphate. Solvent and volatiles were then removed from the organic phase under vacuum to yield a yellow liquid, which was further purified using column chromatography using silica and dichloromethane as eluent. The eluent was then removed under vacuum to yield a pale yellow liquid. Yield= 62%.

### Comparative Example 15

### Adhesion promotion of a poly(urethane) hot-melt adhesive and PUR foam laminate to Nitrile-Butadiene Rubber (NBR) using an adhesion promotion layer consisting of a polymer made with N,N-Diallyl-2(-butyl-diallylcarbamoylmethylamino)acetamide

N,N-Diallyl-2-(butyl-diallylcarbamoylmethylamino)acetamide (890.0g) was pre-heated to 80°C after which a mixture of thermal initiator Vazo 67 (DuPont) (10.0g) in N, N-Diallyl-2-(butyl-diallylcarbamoylmethylamino)acetamide (100.0g) was added over 2 hours with the temperature maintained at 80°C with constant stirring and under a nitrogen atmosphere. This reaction was left to react for a further 14 hours under the same conditions and then left to cool to room temperature.

The photoinitiator 2-isopropyl thioxanthone (ITX) (31.8g) and synergist ethyl 4-(dimethylamino) benzoate (EDB) (21.2g) were then added and fully dissolved into the mixture prior to use.

This formulation was then coated onto the underside of NBR rubber flooring using a reverse roller method to approximately 2 grams per square metre coat weight and cured under a 200W/cm UV lamp using an iron doped mercury bulb.

A moisture curing MDI based polyurethane hot melt (100% solids) was then deposited at 160°C onto the adhesion promoted NBR at a coating weight between 70 - 80 g/m². Immediately afterwards a PUR foam sheet was laminated onto the hot melt coating under pressure and allowed to cool to room temperature.

### Synthesis of N, N-Diallyl-2-(butyl-diallylcarbamoylmethylamino)acetamide

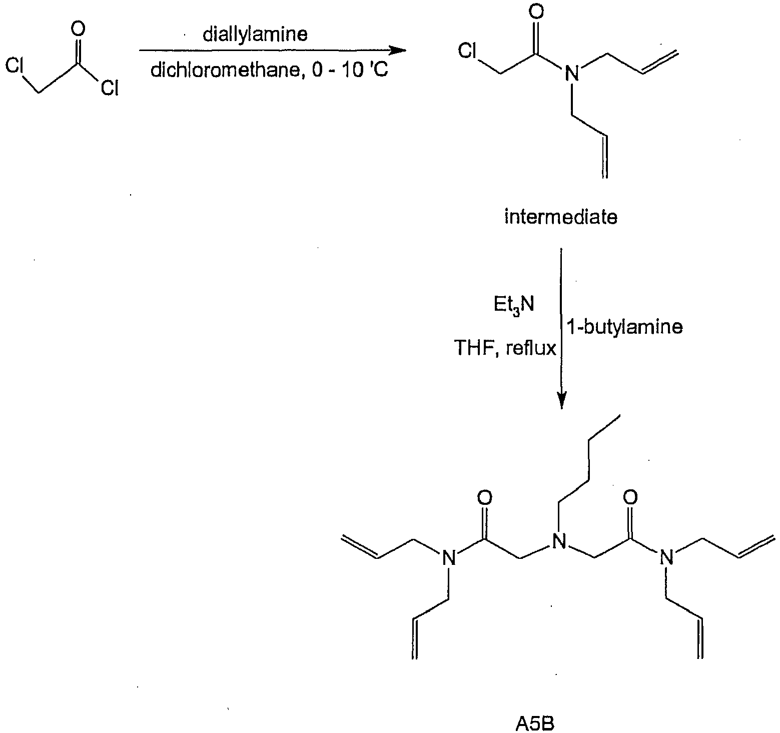

Chloroacetyl chloride (98%, 212g, 1.883 moles) and dichloromethane (397.5g, 4.680 moles) were added to a reaction vessel and cooled to 5°C. N,N-diallylamine (freshly distilled, 402.57g, 4.143 moles) was added to dichloromethane (397.5g, 4.680moles) and this mixture was then added dropwise to the chloroacetyl chloride mixture over several hours with constant stirring with the temperature kept below 10°C. The reaction mixture was then left to reach room temperature and then washed in water (1.5l). The organic phase was washed again in water, followed by separation of the organic phase. Solvent and volatiles were then removed from the organic phase under vacuum to yield a yellow oil, which was further purified by column chromatography with ethyl acetate eluent and silica. Eluent was removed under vacuum to yield a yellow oil. The yield was ~78%.

N,N-Diallyl-2-chloroacetamide (intermediate) (86.75g, 0.500moles), triethylamine (154.38g, 1.500moles) and tetrahydrofuran (222.25g, 3.082moles) were charged into a reaction flask with 1-butylamine (99%, 18.29g, 0.250moles) added dropwise over 15 minutes with constant stirring. The temperature of the reaction was brought to reflux and maintained for 4 hours. The reaction was then cooled to room temperature followed by filtration of the triethylamine hydrochloride salt from the reaction liquor. After removal of solvent under vacuum the product was added to dichloromethane (200ml) and then washed twice in water (300ml). The organic phase was separated, dried with magnesium sulfate and filtered. This was followed by removal of solvent under vacuum to yield a pale yellow oil. The yield was ~ 88%.

### Example 16

### Adhesion promotion of a solvent free acrylate dispersion floor adhesive to Styrene-Butadiene Rubber (SBR) using an adhesion promotion layer consisting of a polymer made with N,N-Diallyl-2(-butyldiallylcarbamoylmethylamino)acetamide

N, N-Diallyl-2-(butyl-diallylcarbamoylmethylamino)acetamide (890.0g) was pre-heated to 80°C after which a mixture of thermal initiator Vazo 67 (DuPont) (10.0g) in N, N-Diallyl-2-(butyl-diallylcarbamoylmethylamino)acetamide (100.0g) was added over 2 hours with the temperature maintained at 80°C with constant stirring and under a nitrogen atmosphere. This reaction was left to react for a further 14 hours under the same conditions and then left to cool to room temperature. The photoinitiator 2-isopropyl thioxanthone (ITX) (31.8g) and synergist ethyl 4-(dimethylamino) benzoate (EDB) (21.2g) were then added and fully dissolved into the mixture prior to use.

This formulation was then coated onto the underside of SBR rubber flooring using a reverse roller method to approximately 2 grams per square metre coat weight and cured under a 200W/cm UV lamp using an iron doped mercury bulb.

The treated SBR was then bonded to wooden flooring that had been coated with a solvent free acrylate dispersion adhesive at a coating weight of 350g/m² using a spreading trowel. Approximately 15 minutes was left between spreading of adhesive and bonding to the rubber with an even force applied to the SBR surface once it had been laid onto the wooden flooring.

### Comparative Example 17

### Adhesion promotion of a NBR rubber to FKM fluoroelastomer using an adhesion promotion layer consisting of a polymer made with N,N-Diallyl-3-(propylamino)propanamide and 1,1-Diallyl-3-(6-{3,5-bis-[6-(3,3-diallyl-ureido)-hexyl] -2,4,6-trioxo-[1,3,5]-triazinan-1-yl-hexyl)urea

The thermal initiator Vazo67 (DuPont) was added at 5% by weight to a mixture of N, N-Diallyl-3- (propylamino)propanamide and 1,1-Diallyl-3-(6{3,5-bis-[6-(3,3 diallyl-ureido)-hexyl}-2,4,6-trioxo[1,3,5]-triazinan-1-yl-hexyl)urea in a 4:1 ratio by weight respectively. This mixture was heated to 80°C, which was maintained for 16 hours with constant stirring under a nitrogen atmosphere. After this reaction had cooled the photoinitiator 2-isopropyl thioxanthone (ITX) and the synergist ethyl 4-(dimethylamino) benzoate (EDB) were added at 3% and 2% by weight respectively and fully dissolved into the mixture.

A thin, uniform layer of this formulation was coated onto a piece of pre-vulcanised FKM fluoroelastomer at approximately 3 g/m² coating weight then cured using a focused 200W/cm UV lamp with an Iron doped mercury bulb. A strip of pre-vulcanised NBR rubber was then placed on top of the coated FKM fluoroelastomer and heated at 180°C at approximately 4 bar pressure for 10 minutes.

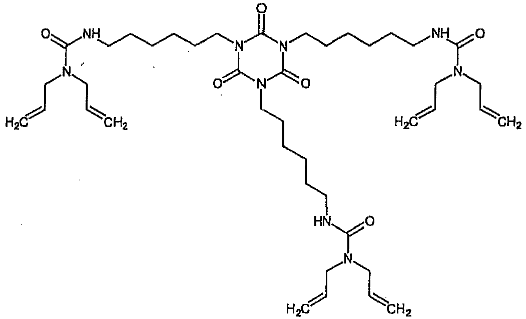

### 1,1-Diallyl-3-(6-{3,5-bis-[6-(3,3-diallyl-ureido)-hexyl]-2,4,6-trioxo-[1,3,5]-triazinan-1-yl-hexyl)urea

### Synthesis of 1,1-Diallyl-3-(6-{3,5-bis-[6-(3,3-diallyl-ureido)-hexyl]-2,4,6-trioxo-[1,3,5]-triazinan-1-ylhexyl)urea

N,N-diallylamine (Freshly dried, 30.60g) was added dropwise to a mixture of the isocyanate 'Tolonate HDT-LV2' (Rhodia) (50.4g) in dichloromethane (>99.5%, 132.50g) over 2 hours with the temperature maintained to below 30°C and with constant stirring. After the addition of the diallylamine the mixture was maintained for a further 30 minutes at room temperature. Solvent and excess diallylamine were removed under vacuum to yield a high viscosity, amber liquid with a yield of 80.1%.

### Comparative Example 18

### Adhesion promotion of cyanoacrylate adhesive to poly(propylene) using N,N-di(prop-2-en-1-yl)octane-1-sulfonamide

A formulation containing the initiators Ciba Irgacure 184 (1.5% by weight) and DuPont Vazo 67 (2% by weight) dissolved in *N*,*N*-di(prop-2-en-1-yl)octane-1-suifonamide was made.

A thin film of this formulation, approximately 5 microns in thickness, was applied onto a poly(propylene) plaque and cured using a focused 160W/cm UV source fitted with an undoped mercury bulb. This process was repeated to provide a double layer of the polymer on the poly(propylene).

Two pieces of poly(propylene) adhesion promoted in this way were then adhered together using a cyanoacrylate adhesive. 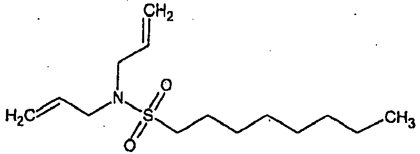 *N*,*N*-di(prop-2-en-1-yl)octane-1-sulfonamide

### Synthesis of N,N-di(prop-2-en-1-yl)octane-1-sulfonamide

Diallylamine (99%, 10.69g), triethylamine (99%, 11.1g) and dichloromethane (99+%, 50ml) were mixed and added dropwise to a cooled (0°C) mixture of 1-octane sulfonyl chloride (99%+, 21.3g) in dichloromethane (99+%, 200ml). Temperature was maintained between 0-10 °C with continuous stirring for several hours to allow all of the diallylamine mixture to be added. The reaction mixture was then left to come to room temperature.

The reaction mixture was then washed in dilute HCl (3M, 500ml) and the organic layer separated. Washing of the organic layer was repeated in water or weak brine, followed by drying of the organic layer with anhydrous magnesium sulphate. Dichloromethane and other volatiles were then removed under vacuum to produce a pale yellow liquid, which was then purified further by column chromatography using silica gel (60Å) and dichloromethane as eluent to yield a pale yellow oil.

### Comparative Example 19

### Adhesion of a polymer made with N,N-Diallylhexanamide to metals and adhesion promotion of PET to metals

Tin plate and tin free steel samples were coated after cleaning with ethyl acetate. The coating was a mixture of 95% N,N-Diallylhexanamide and 5% Irgacure 184 initiator. Prior to application of the coating to the metal substrates, the coatings were reduced with ethyl acetate in the ratio 3:1 ethyl acetate: N,N-Diallylhexanamide. The coatings were applied to each metal sample at approximate dry-film thickness of 1.5 µn. The coated samples were then dried in an oven at 100°C for 20 minutes to drive off solvent and possibly to thermally initiate reactions between the monomer and the metal surface. After drying, the coatings were cured under a UV lamp. PET was then applied by melting in an oven at a temperature of 260°C with a drying time of 2 minutes. The coated metal samples were then tested for cross hatch adhesion to BS EN ISO 2409 and for flexibility and adhesion after bending through 180°C. Excellent wetting of and adhesion to the tin plate and tin free steel samples was observed. Complete adhesion to the metal samples was observed, i.e. there was no removal of coating by the plate used in the adhesion test. Additionally, complete adhesion to the PET was observed, with no cracking or splitting of the PET occurring.

### Synthesis of N,N-Diallylhexanamide

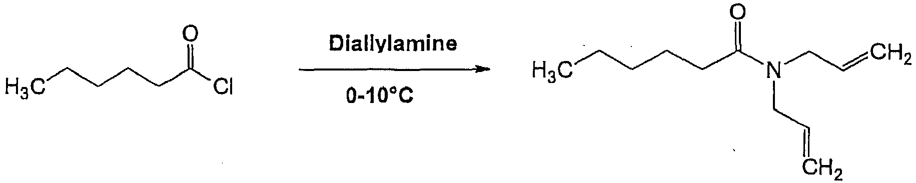

Diallylamine (99%, 37g, 381mmoles), triethylamine (99%, 40g, 396mmoles) and dichloromethane (99+%, 50ml) were mixed and added dropwise to a cooled (0°C) mixture of hexanoyl chloride (99%+, 50g, 371mmoles) in dichloromethane (99+%, 200ml). Temperature was maintained between 0-10 °C with continuous stirring for several hours to allow all of the diallylamine mixture to be added. The reaction mixture was then left to come to room temperature.

The reaction mixture was then washed in dilute HCl (3M, 500ml) and the organic layer separated. Washing of the organic layer was repeated in water or weak brine, followed by drying of the organic layer with anhydrous magnesium sulphate. Dichloromethane and other volatiles were then removed under vacuum to produce a pale yellow liquid, which was then purified further by column chromatography using silica gel (60Å) and dichloromethane as eluent to yield an almost colourless oil. Yield = 70%.

### Example 20

### Adhesion of a polymer made with N,N-Diallyl-3-(propylamino) propanamide

The methodologies described above in Example 19 were used in conjunction with the monomer N,N-Dialiyl-3-(propylamino) propanamide. Almost complete wetting of the metal samples was observed, although some reticulation of the coating was seen during drying. Adhesion to the metal samples was excellent, and adhesion to the PET was very good.

### Example 21

### Adhesion promotion of a polyethylene coating to aluminium using an adhesion promotion layer consisting of a polymer made with N,N-Diallyl-3-(propylamino) propanamide and N,N,N,N-Tetrallylethanediamide.

An aluminium substrate was coated with a mixture of N,N,-Diallyl-3-(propylamino) propanamide (70%), N,N,N,N,-Tetrallylethanediamide (25%) and Irgacure 127 initiator (5%). The coating was cured under a UV lamp (Fusion UV F300, 120W/cm) with a belt speed of 2-2.5m/min, four passes with "dry" cure achieved in two passes. Extruded PE (treated and untreated) was coated onto the cured aluminium samples. Adhesion of the polymeric coating to aluminium was tested according to the standard test methods ISO 4264, EN 24624 and ASTM D 4541, and a good adhesion value of 7.8MPa was recorded. Good adhesion to the PE coatings was also observed, with a "T-peel" adhesion value of 2.0N/15mm being recorded.

### Comparative Example 22

### Adhesion promotion of a water based paint to polypropylene and high density polyethylene using an adhesion promotion layer consisting of a polymer made with N,N-Diallylhexanamide.

Polypropylene (PP) and high density polyethylene (HDPE) panels were cleaned by wiping with 2-propanol. The panels were then coated with a formulation consisting of 90.2wt% N,N-Diallylhexanamide, 2.3wt% 1,3,5-trimesoyl amide crosslinker (benzene-1,3,5-tricarboxylic acid-tris-N, N-Diallylamide), 4.5wt% Speedcure ITX photoinitiator, and 3.0wt% Speedcure EDB synergist. The coated panels were then passed under a 120W/cm UV lamp using an iron doped mercury bulb, to give a cured film thickness of approximately 3µm. Once the coated panels were cool, paint (Senosol Hydrometallic (RTM), Weilburger Coatings GmbH, D-35781, Weilburger-Lahn, Germany) was applied and dried according to the manufacturer's specification. The adhesion of the polymeric coating to the PP and HDPE panels and to the paint were determined according to ASTM D3369B/BS EN ISO 2409. In both instances, excellent ASTM D3359B adhesion ratings of 5B were obtained. 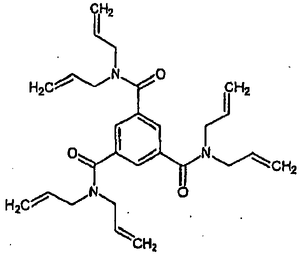 benzene-1,3,5-tricarboxylic acid-tris-N, N-Diallylamide

### Synthesis of Benzene-1,2,4-tricarboxylic acid-tris-N, N-Diallylamide

A mixture of N,N-Diallylamine (128.26g, 1.32 moles) and dichloromethane (106.0g, 1.248 moles) was added to a funnel and added dropwise over 75 minutes to a reaction vessel containing a cooled mixture (10°C) of 1,3,5-trimesoyl chloride (53.1g, 0.200 moles) in dichloromethane (530.0g, 6.24moles) with constant stirring. The temperature was maintained at < 10°C for the duration of the addition of the diallylamine solution and then left to return to room temperature over another 60 minutes with constant stirring. The organic reaction product was then washed with an excess of water (1x600ml and 2x300ml) to remove the hydrochloride salt of the diallylamine, followed by drying over MgSO₄. Solids were then filtered off and the solvent removed under vacuum. The crude product was then purified by column chromatography using a silica column and dichloromethane as eluent. The dichloromethane was again removed under vacuum to yield a pale yellow, viscous product. Yield 60.2%.

### Comparative Example 23

Adhesion promotion of m-aramid to silicone and fluoroelastomer using N,N-Diallyl-3-(propylamino)propanamide and N, N, N, N-Tetraallylethanediamide

To a mixture of N,N-Diallyl-3-(propylamino)propanamide and N, N, N, N-Tetraallylethanediamide

(in the ratio of 9:1 by weight) a thermal initiator was added (Vazo 67, DuPont, 5% weight of total monomer mixture) and stirred until fully dissolved. The mixture was then maintained at 70°C for 8 hours with constant stirring to produce a viscous yellow oil, to which a photoinitiator was added (Ciba Irgacure 819, 2% by weight) and mixed thoroughly.

This formulation was then applied onto each side of a strip of m-aramid cloth (DuPont Nomex) at a coating weight of approximately 5 grams per square metre. The coating was cured sequentially after each layer was deposited using focused 200W/cm UV source with an iron doped mercury bulb.

Strips of fluoro-elastomer and silicone compounds containing initiators or other curing agents were placed on each side of the adhesion promoted textile and then treated at 190°C at 65-80 psi for 15 minutes to cure fluoro-elastomer and silicone rubber and bond them to the textile. 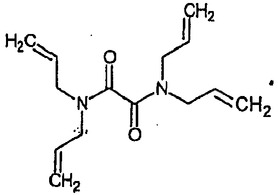 N, N, N, N-Tetraallylethanediamide

### Comparative Example 24

Adhesion promotion of m-aramid to EPDM rubber using N, N-Diallyl-3-(propylamino)propanamide and N, N, N', N'-Tetraallylethanediamide

The same formulation coating method as used in example 23 was used with a woven m-aramid fabric but instead placed between two sheets of EPDM rubber compound. The m-aramid fabric was bonded to the EPDM under elevated pressure (45-75psi) and temperature (190°C) for 15 minutes.

### Comparative Example 25

Adhesion promotion of m-aramid to silicone rubber and fluoroelastomer using benzene-1,3,5-tricarboxylic acid-tris-N,N-Diallylamide and 2,2',2",2"'-(ethane-1,2-diylbis(azanetriyl))tetrakis(*N*,*N*-diallylacetamide)

A mixture of benzene-1,3,5-tricarboxylic acid-tris-N, N-Diallylamide and 2,2',2",2"'-(ethane-1,2-diylbis(azanetriyl))tetrakis(N,N-diallylacetamide) was made in a 9:1 ratio by weight, respectively. Photoinitiator (Ciba Irgacure 127) was added at 3% of total weight of monomer mixture and dissolved by maintaining gentle heating of the mixture. This formulation was then applied onto each side of a strip of m-aramid cloth (DuPont Nomex) at a coating weight of approximately 10 grams per square metre and the coating was cured sequentially after each layer was deposited using focused 200W/cm UV source with an iron doped mercury bulb.

Strips of fluoro-elastomer and silicone compounds containing initiators or other curing agents were placed on each side of the adhesion promoted textile and then treated at approximately 175°C in a 40 tonne upstroking press for 25 minutes to cure the fluoro-elastomer and silicone rubber and bond them to the textile. 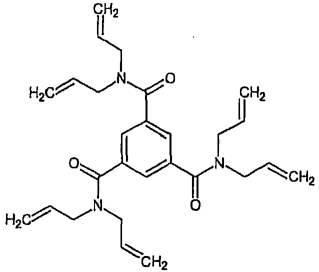 benzene-1,3,5-tricarboxylic acid-tris-N,N-Diallylamide

### Synthesis of Benzene-1,2,4-tricarboxylic acid-tris-N, N-Diallylamide

A mixture of N,N-Diallylamine (128.26g, 1.32 moles) and dichloromethane (106.0g, 1.248 moles) was added to a funnel and added dropwise over 75 minutes to a reaction vessel containing a cooled mixture (10°C) of 1,3,5-trimesoyl chloride (53.1g, 0.200 moles) in dichloromethane (530.0g, 6.24moles) with constant stirring. The temperature was maintained at < 10°C for the duration of the addition of the diallylamine solution and then left to return to room temperature over another 60 minutes with constant stirring. The organic reaction product was then washed with an excess of water (1x600ml and 2x300ml) to remove the hydrochloride salt of the diallylamine, followed by drying over MgSO₄. Solids were then filtered off and the solvent removed under vacuum. The crude product was then purified by column chromatography using a silica column and dichloromethane as eluent. The dichloromethane was again removed under vacuum to yield a pale yellow, viscous product. Yield 60.2%. 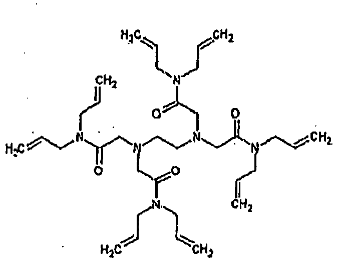 2,2',2",2"'-(ethane-1,2-diylbis(azanetriyl))tetrakis(*N*,*N*-diallylacetamide)

### Synthesis of 2,2', 2", 2"' - (ethane-1,2 -diylbis (azanetriyl)) tetrakis (N,N-diallylacetamide)

A mixture of 4-dimethylamino pyridine (0.5g), dicyclohexylcarbodiimide (103.0g), ethylenediamine tetraacetic acid (36.0g), diallylamine (53.0g) and dichloromethane (250g) was added to a reaction vessel and maintained at approximately 20°C for 120 hours with constant stirring. Solids, including urea formed in the reaction, were then removed by filtration followed by the removal of amine and solvent under vacuum. After removal of impurities a clear, viscous oil was obtained (~65%).

### Comparative Example 26

Adhesion promotion of a poly(ester) textile to silicone rubber and fluoroelastomer using N,N-diallyl hexanamide and N, N, N', N'-Tetraallylethanediamide

To a mixture of N,N-diallyl hexanamide and N, N, N', N'-Tetraallylethanediamide in the ratio of 9:1 by weight a thermal initiator (Vazo 67, DuPont) was added initially at 1 % weight of total mixture and increased by 1 % after each hour of reaction until 5% was added with a total reaction time of 8 hours; reaction temperature was maintained at 70°C over the whole reaction period . A viscous yellow oil was produced. To this a photoinitiator (Ciba Irgacure 819) was added at 2% by weight of total solution and mixed thoroughly. This formulation was then applied onto each side of a strip of knitted poly(ester) fabric at a coating weight of approximately 5 grams per square metre with UV curing performed sequentially after each layer was deposited.

Strips of fluoro-elastomer and silicone compound were placed on each side of a knitted poly(ester) fabric coated with the adhesion promoting layer and then treated at 190°C at 45-75 psi for 25 minutes to cure fluoro-elastomer and silicone rubber and bond them to the textile.

### Comparative Example 27

Adhesion promotion of a poly(aramid) textile to silicone rubber and fluoroelastomer using a mixture of N,N-Diallyl-3-(propylamino)propanamide, benzene-1,3,5-tricarboxyric acid-tris-N, N-Diallylamide and the fluorinated monomer, 2,2,3,3,4,4,5,5,6,6,7,7,8,8.8-pentadecafluoro-*N*,*N*-di(prop-2-en-1-yl)octanamide

A mixture of N, N-Diallyl-3-(propylamino)propanamide (85.5wt%), benzene-1,3,5-tricarboxylic acid-tris-N, N-Diallylamide (9.5wt%), 2,2,3,3,4,4,5,5,6,6,7,7,8,8,8-pentadecafluoro-*N*,*N*-di(prop-2-en-1-yl)octanamide (2wt%) and the photoinitiator Irgacure 127 (3wt%, Ciba SC) was applied onto each side of a strip of m-aramid cloth (DuPont Nomex) at a coating weight of approximately 10 grams per square metre. The coating was cured sequentially after each layer was deposited using focused 200W/cm UV source with an iron doped mercury bulb.

Strips of fluoro-elastomer and silicone compounds containing initiators or other curing agents were placed on each side of the adhesion promoted textile and then treated at approximately 175°C in a 40 tonne up-stroking press for 25 minutes to cure the fluoro-elastomer and silicone rubber and bond them to the textile. 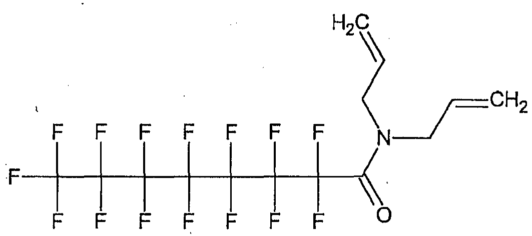 2,2,3,3,4,4,5,5,6,6,7,7,8,8,8-pentadecafluoro-*N*,*N*-di(prop-2-en-1-yl)octanamide

### Synthesis of 2,2,3,3,4,4,5,5,6,6,7,7,8,8,8-pentadecafluoro-N,N-di(prop-2-en-1-yl)octanamide

A mixture of perfluorooctanoyl chloride (20.0g) and dichloromethane (1.6g) was added drop-wise over 1 hour to a stirring mixture of diallylamine (9.88g, >99%) and dichloromethane (1.72g), cooled to 0°C. The reaction was allowed to warm to room temperature with continuous stirring for a further hour.

The product was washed with water (500ml) twice, followed by the removal of the dichloromethane under vacuum to yield a very low viscosity orange-yellow liquid (yield 79%).

## Claims

1. A method of coating a low surface energy substrate including the steps of:
a) providing a polymeric precursor which includes a group of sub- formula (I) 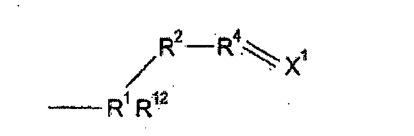
where R¹ is C(O)N, S(O)₂N, C(O)ON or CH₂ON;
R¹² is selected from hydrogen, halo, nitro;
R² is (CR⁷R⁸)ₙ, or a group CR⁹R¹⁰, CR⁷R⁸CR⁹R¹⁰ or CR⁹R¹⁰CR⁷R⁸ where n is 0, 1 or 2, R⁷ and R⁸ are independently selected from fluoro, chloro, hydrogen or alkyl, and either one of R⁹ or
R¹⁰ is hydrogen and the other is an electron withdrawing group, or R⁹ and R¹⁰ together form an electron withdrawing group;
R⁴ is CH or CR¹¹ where CR¹¹ is an electron withdrawing group; and
X¹ is a group CX²X³, where X² and X³ are independently selected from hydrogen, fluorine or an optionally substituted hydrocarbyl group,
b) either (i) coating the low surface energy substrate with the polymeric precursor and polymerising the polymeric precursor to form a polymeric coating, or (ii) polymerising the polymeric precursor and contacting the polymerised polymeric precursor with a low surface energy substrate to form a polymeric coating on the low surface energy substrate.

2. A method according to Claim 1 in which the polymeric precursor is a compound of structure (II) 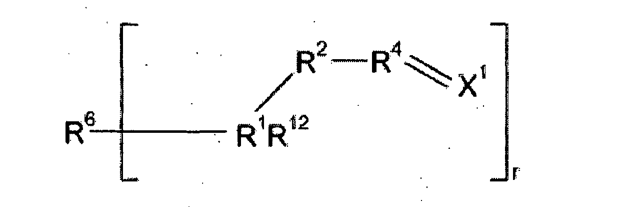 where r is an integer of 1 or more, R⁶ is one or more of a bridging group, an optionally substituted hydrocarbyl group, a perhaloalkyl group, a siloxane group, an amide, or a partially polymerised chain containing repeat units.

3. A method according to claim 2 in which the polymeric precursor is a compound of structure [III] 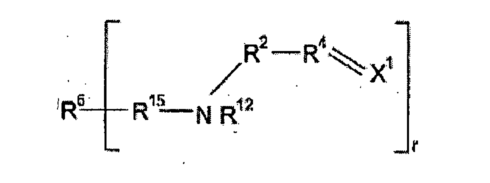 Where R¹⁵ is C(O) or S(O)₂.

4. A method according to Claim 2 in which R⁶ comprises a straight or branched chain hydrocarbyl group, optionally substituted or interposed with functional groups.

5. A method according to Claim 4 in which the straight or branched chain is interposed or substituted with one or more of an amine moiety, C(O) or COOH.

6. A method according to Claim 5 in which the polymeric precursor is a monomer in which R⁶ is a straight or branched chain hydrocarbyl interposed with an amine moiety, or a pre-polymer obtained by pre-polymerisation of said monomer.

7. A method according to Claim 5 in which the polymeric precursor is a monomer in which R⁶ is a straight or branched chain hydrocarbyl substituted with a COOH end group, or a pre-polymer obtained by pre-polymerisation of said monomer.

8. A method according to Claim 4 in which the polymeric precursor is a monomer in which R⁶ is a straight or branched chain alkyl group or partially or per-halogenated straight or branched chain alkyl group having 1 to 30 carbon atoms, or a pre-polymer obtained by pre-polymerisation by said monomer.

9. A method according to Claim 3 in which the polymeric precursor is a monomer in which R¹⁵ is CO and R⁶ terminates in one or more amine moieties thereby forming a urea structure, or a pre-polymer obtained by pre- polymerisation of said monomer.

10. A method according to any previous claim in which the low surface energy substrate is a low surface energy plastics material, an elastomer or a low surface energy metal.

11. A method according to any previous claim for forming a composite structure in which step b) includes bringing a further substrate into contact with the polymeric precursor or the polymerised polymeric precursor, with step b) being performed so that the polymeric coating joins the low surface energy substrate to the further substrate.

12. A method according to any one of Claims 1 to 10 further including the step of c) applying a further coating to the polymeric coating.

13. A method according to Claim 12 in which the coating applied to the polymeric coating is a paint, ink, a protective coating such as polyurethane layer or an adhesive.

14. A coated low surface energy substrate in which the coating is a polymeric coating formed by polymerising a polymeric precursor which includes a group of sub-Formula (I) as defined in Claim 1.

15. A composite structure including a low surface energy substrate, a further substrate and a layer intermediate the low surface energy substrate and the further substrate which bonds to both substrates and is formed by polymerising a polymeric precursor which includes a group of sub-Formula (1) as defined in Claim 1.

## Patentansprüche

1. Ein Verfahren zum Beschichten eines Substrates mit niedriger Oberflächenenergie, das die folgenden Schritte einschließt:
a) Bereitstellen eines Polymer-Präkursors, der eine Gruppe der Unterformel (I) einschließt: 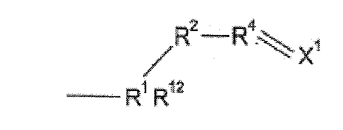
wobei R¹ C(O)N, S(O)₂N, C(O)ON oder CH₂ON ist;
R¹² ausgewählt ist aus Wasserstoff, Halogen, Nitro;
R² (CR⁷R⁸)ₙ oder eine Gruppe CR⁹R¹⁰, CR⁷R⁸CR⁹R¹⁰ oder CR⁹R¹⁰CR⁷R⁸ ist, wobei n 0, 1 oder 2 ist, R⁷ und R⁸ unabhängig ausgewählt sind aus Fluor, Chlor, Wasserstoff oder Alkyl und einer von R⁹ oder R¹⁰ Wasserstoff ist und der andere eine elektronenziehende Gruppe ist oder R⁹ und R¹⁰ zusammen eine elektronenziehende Gruppe bilden;
R⁴ CH oder CR¹¹ ist, wobei CR¹¹ eine elektronenziehende Gruppe ist; und
X¹ eine Gruppe CX²X³ ist, wobei X² und X³ unabhängig ausgewählt sind aus Wasserstoff, Fluor oder einer optional substituierten Hydrocarbylgruppe,
b) entweder (i) Beschichten des Substrates mit niedriger Oberflächenenergie mit dem Polymer-Präkursor und Polymerisieren des Polymer-Präkursors, um eine Polymer-Beschichtung zu bilden, oder (ii) Polymerisieren des Polymer-Präkursors und In-Kontakt-Bringen des polymerisierten Polymer-Präkursors mit einem Substrat mit niedriger Oberflächenenergie, um auf dem Substrat mit niedriger Oberflächenenergie eine Polymer-Beschichtung zu bilden.

2. Verfahren gemäß Anspruch 1, wobei der Polymer-Präkursor eine Verbindung der Struktur (II) ist: 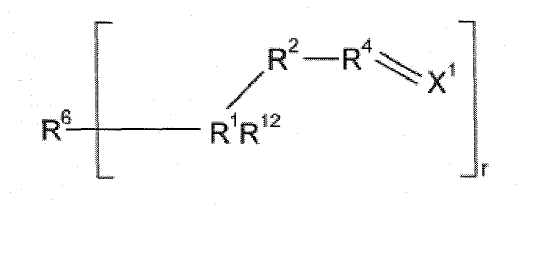 wobei r eine ganze Zahl von 1 oder mehr ist, R⁶ eines oder mehrere aus Folgenden ist: einer Brückengruppe, einer optional substituierten Hydrocarbylgruppe, einer Perhalogenalkylgruppe, einer Siloxangruppe, einem Amid oder einer teilweise polymerisierten, Wiederholungseinheiten enthaltenden Kette.

3. Verfahren gemäß Anspruch 2, wobei der Polymer-Präkursor eine Verbindung der Struktur [III] ist: 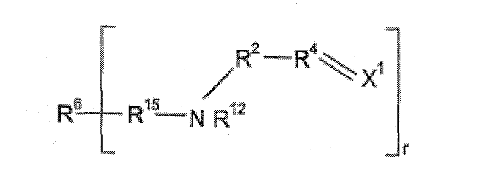 wobei R¹⁵ C(O) oder S(O)₂ ist.

4. Verfahren gemäß Anspruch 2, wobei R⁶ eine gerad- oder verzweigtkettige Hydrocarbylgruppe, optional mit funktionellen Gruppen substituiert oder dazwischen eingefügt, umfasst.

5. Verfahren gemäß Anspruch 4, wobei zwischen die gerade oder verzweigte Kette eines oder mehrere von einem Aminanteil, C(O) oder COOH eingefügt ist oder diese mit einem oder mehreren von diesen substituiert ist

6. Verfahren gemäß Anspruch 5, wobei der Polymer-Präkursor ein Monomer ist, wobei R⁶ ein gerad- oder verzweigtkettiges Hydrocarbyl ist, zwischen welches ein Aminanteil eingefügt ist, oder ein Vorpolymer, das durch die Vorpolymerisation des Monomers erhalten wurde.

7. Verfahren gemäß Anspruch 5, wobei der Polymer-Präkursor ein Monomer ist, wobei R⁶ ein gerad- oder verzweigtkettiges Hydrocarbyl ist, das mit einer COOH-Endgruppe substituiert ist, oder ein Vorpolymer, das durch die Vorpolymerisation des Monomoers erhalten wurde.

8. Verfahren gemäß Anspruch 4, wobei der Polymer-Präkursor ein Monomer ist, wobei R₆ eine gerad- oder verzweigtkettige Alkylgruppe oder eine teilweise oder vollhalogenierte gerad- oder verzweigtkettige Alkylgruppe mit 1 bis 30 Kohlenstoffatomen ist, oder ein Vorpolymer, das durch die Vorpolymerisation des Monomers erhalten wurde.

9. Verfahren gemäß Anspruch 3, wobei der Polymer-Präkursor ein Monomer ist, wobei R¹⁵ CO ist und R⁶ in einem oder mehreren Aminanteilen terminiert, wodurch eine Harnstoffstruktur gebildet wird, oder ein Vorpolymer, das durch die Vorpolymerisation des Monomers erhalten wurde.

10. Verfahren gemäß einem vorhergehenden Anspruch, wobei das Substrat mit niedriger Oberflächenenergie ein Kunststoffmaterial mit niedriger Oberflächenenergie, ein Elastomer oder ein Metall mit niedriger Oberflächenenergie ist.

11. Verfahren gemäß einem vorhergehenden Anspruch zum Bilden einer Verbundstruktur, wobei Schritt b) das In-Kontakt-Bringen eines weiteren Substrats mit dem Polymer-Präkursor oder dem polymerisierten Polymer-Präkursor einschließt, wobei Schritt b) durchgeführt wird, so dass die Polymer-Beschichtung das Substrat mit niedriger Oberflächenenergie an das weitere Substrat fügt.

12. Verfahren gemäß einem der Ansprüche 1 bis 10, das ferner den Schritt c) des Auftragens einer weiteren Beschichtung auf die Polymer-Beschichtung einschließt.

13. Verfahren gemäß Anspruch 12, wobei die auf die Polymer-Beschichtung aufgetragene Beschichtung ein Lack, eine Tinte, eine Schutzbeschichtung, wie etwa eine Polyurethanschicht, oder ein Klebstoff ist.

14. Ein beschichtetes Substrat mit niedriger Oberflächenenergie, wobei die Beschichtung eine Polymer-Beschichtung ist, die durch das Polymerisieren eines Polymer-Präkursors gebildet wird, der eine Gruppe der Unterformel (I), wie in Anspruch 1 definiert, einschließt.

15. Eine Verbundstruktur, einschließend ein Substrat mit niedriger Oberflächenenergie, ein weiteres Substrat und eine Schicht, die zwischen dem Substrat mit niedriger Oberflächenenergie und dem weiteren Substrat liegt, die an beide Substrate bindet und durch das Polymerisieren eines Polymer-Präkursors gebildet wird, der eine Gruppe der Unterformel (1), wie in Anspruch 1 definiert, einschließt.

## Revendications

1. Un procédé de revêtement d'un substrat à faible énergie de surface incluant les étapes consistant à :
a) fournir un précurseur polymère qui inclut un groupe de sous-formule (I) 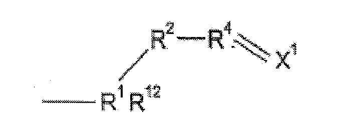
où R¹ est C(O)N, S(O)₂N, C(O)ON ou CH₂ON ;
R¹² est sélectionné parmi hydrogène, halo, nitro ;
R² est (CR⁷R⁸)ₙ, ou un groupe CR⁹R¹⁰, CR⁷R⁸CR⁹R¹⁰ ou CR⁹R¹⁰CR⁷R⁸ où n est 0, 1 ou 2, R⁷ et R⁸ sont indépendamment sélectionnés parmi fluoro, chloro, hydrogène ou alkyle, et l'un ou l'autre de R⁹ ou R¹⁰ est hydrogène et l'autre est un groupe attracteur d'électrons, ou R⁹ et R¹⁰ forment ensemble un groupe attracteur d'électrons ;
R⁴ est CH ou CR¹¹ où CR¹¹ est un groupe attracteur d'électrons ; et
X¹ est un groupe CX²X³, où X² et X³ sont indépendamment sélectionnés parmi hydrogène, fluorine ou un groupe hydrocarbyle facultativement substitué,
b) soit (i) revêtir le substrat à faible énergie de surface avec le précurseur polymère et polymériser le précurseur polymère pour former un revêtement polymère, soit (ii) polymériser le précurseur polymère et mettre en contact le précurseur polymère polymérisé avec un substrat à faible énergie de surface pour former un revêtement polymère sur le substrat à faible énergie de surface.

2. Un procédé selon la revendication 1 dans lequel le précurseur polymère est un composé de structure (II) 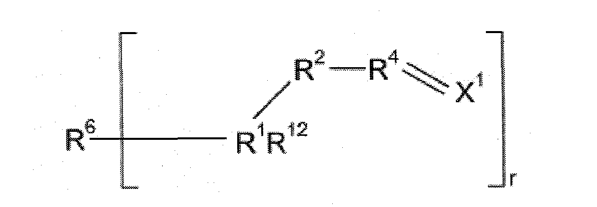 où r est un entier de 1 ou plus, R⁶ est un ou plusieurs élément(s) parmi un groupe de pontage, un groupe hydrocarbyle facultativement substitué, un groupe perhalogénoalkyle, un groupe siloxane, un amide, ou une chaîne partiellement polymérisée contenant des unités de répétition.

3. Un procédé selon la revendication 2 dans lequel le précurseur polymère est un composé de structure [III] 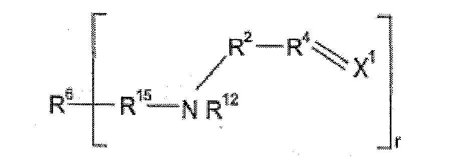 Où R¹⁵ est C(O) ou S(O)₂.

4. Un procédé selon la revendication 2 dans lequel R⁶ comprend un groupe hydrocarbyle à chaîne droite ou ramifiée, facultativement substitué ou entrecoupé par des groupes fonctionnels.

5. Un procédé selon la revendication 4 dans lequel la chaîne linéaire ou ramifiée est entrecoupée ou substituée par un ou plusieurs élément(s) parmi un groupement amine, C(O) ou COOH.

6. Un procédé selon la revendication 5 dans lequel le précurseur polymère est un monomère dans lequel R⁶ est un hydrocarbyle à chaîne droite ou ramifiée entrecoupé par un groupement amine, ou un pré-polymère obtenu par pré-polymérisation dudit monomère.

7. Un procédé selon la revendication 5 dans lequel le précurseur polymère est un monomère dans lequel R⁶ est un hydrocarbyle à chaîne droite ou ramifiée substitué par un groupe terminal COOH, ou un pré-polymère obtenu par pré-polymérisation dudit monomère.

8. Un procédé selon la revendication 4 dans lequel le précurseur polymère est un monomère dans lequel R⁶ est un groupe alkyle à chaîne droite ou ramifiée ou un groupe alkyle partiellement halogéné ou per-halogéné à chaîne droite ou ramifiée ayant de 1 à 30 atomes de carbone, ou un pré-polymère obtenu par pré-polymérisation dudit monomère.

9. Un procédé selon la revendication 3 dans lequel le précurseur polymère est un monomère dans lequel R¹⁵ est CO et R⁶ se termine par un ou plusieurs groupement(s) amine(s), formant ainsi une structure de l'urée, ou un pré-polymère obtenu par pré-polymérisation dudit monomère.

10. Un procédé selon n'importe quelle revendication précédente dans lequel le substrat à faible énergie de surface est un matériau plastique à faible énergie de surface, un élastomère ou un métal à faible énergie de surface.

11. Un procédé selon n'importe quelle revendication précédente pour former une structure composite dans laquelle l'étape b) inclut la mise en contact d'un autre substrat avec le précurseur polymère ou le précurseur polymère polymérisé, l'étape b) étant réalisée de sorte que le revêtement polymère attache le substrat à faible énergie de surface à l'autre substrat.

12. Un procédé selon l'une quelconque des revendications 1 à 10 incluant en outre l'étape consistant à c) appliquer une autre couche sur le revêtement polymère.

13. Un procédé selon la revendication 12 dans lequel le revêtement appliqué sur le revêtement polymère est une peinture, une encre, un revêtement protecteur tel qu'une couche de polyuréthane ou un adhésif.

14. Un substrat à faible énergie de surface revêtu dans lequel le revêtement est un revêtement polymère formé par polymérisation d'un précurseur polymère qui inclut un groupe de sous-formule (I) tel que défini dans la revendication 1.

15. Une structure composite incluant un substrat à faible énergie de surface, un autre substrat et une couche intermédiaire entre le substrat à faible énergie de surface et l'autre substrat qui se lie aux deux substrats et est formé par polymérisation d'un précurseur polymère qui inclut un groupe de sous-formule (1) tel que défini dans la revendication 1.
